# EUROPÄISCHE PATENTSCHRIFT

(11) **EP 1 357 367 B1**
(45) Veröffentlichungstag und Bekanntmachung des Hinweises auf die Patenterteilung: **09.03.2011**
(21) Anmeldenummer: 03100834.5
(22) Anmeldetag: 31.03.2003
(51) Int. Cl.: G01G 21/24, G01G 23/00

(54) **Waage mit Trägerelement zur Ankopplung einer Waagschale an eine Wägezelle**
Weighing scale with supporting element for connecting a weighing pan to a weighing cell
Balance avec élément de support pour connecter un plateau avec un capteur de pesage

(30) Priorität: 03.04.2002 DE 10214755
(43) Veröffentlichungstag der Anmeldung: 29.10.2003
(73) Patentinhaber: Mettler-Toledo AG, 8606 Greifensee (CH)
(72) Erfinder: Lüdi, Beat, 8620, Wetzikon (CH); Fringeli, Eduard, 8606, Bubikon (CH); Lüchinger, Paul, 8610, Uster (CH)

(56) Entgegenhaltungen:
- GB-A- 2 119 527
- US-A- 4 440 250
- US-A- 4 566 548

## Beschreibung

Die Erfindung betrifft eine Waage mit einer einen vertikal auslenkbaren Lastaufnehmer aufweisenden Wägezelle, mit einer Waagschale zur Aufnahme von Wägegut und mit einem Trägerelement zur Ankopplung der Waagschale an dem vertikal auslenkbaren Lastaufnehmer der Wägezelle, wobei ein mit einer Auflage für mindestens ein Kalibriergewicht einer Kalibriervorrichtung versehener Ausleger fest mit dem Trägerelement verbunden ist.

Waagen, bei welchen die Waagschale und/oder eine Kalibriervorrichtung an dem von der Wägezelle entfernten Ende eines mit der Wägezelle verbundenen Auslegers angeordnet sind, sind im Stand der Technik bekannt. Für solche Waagen besteht leicht die Gefahr, dass aufgrund der am Ausleger angreifenden Kräfte schädliche Drehmomente über eine Verformung des vertikal beweglichen Lastaufnehmers in die Wägezelle, insbesondere in deren empfindliche Biegegelenke, eingeleitet werden. Dies wirkt sich besonders bei aussermittig auf die Waagschale aufgesetzten Lasten aus, d.h. die Waage besitzt ein ungünstiges Eckenlastverhalten.

In der DE 33 30 988 A1 ist eine Waage offenbart, bei welcher der die Waagschale aufnehmende Ausleger L-förmig ausgebildet ist, wobei der horizontale L-Schenkel an seinem freien Ende die starr damit verbundene Waagschale trägt. Der vertikale L-Schenkel ist mit der Wägezelle über eine U-förmige Armlagerung verbunden. Dabei übergreifen deren beide horizontale U-Schenkel den vertikal beweglichen Lastaufnehmer der Wägezelle oben und unten in deren Lenkerebenen. Die Armlagerung ist am Lasteinleitungsteil der Wägezelle in zwei vertikal übereinander liegenden Lagerstellen befestigt, oben verschraubt und unten um eine vertikale Achse im Rahmen der elastischen Verwindbarkeit der Armlagerung drehbar befestigt. Die Anordnung schafft dabei mittels der Schrauben eine Justiermöglichkeit für die Waagschale sowohl in horizontaler als auch in vertikaler Richtung. Dadurch, dass die Krafteinleitung in der Lenkerebene erfolgt, konnte mit dieser Konstruktion einer Waage deren Eckenlastempfindlichkeit reduziert werden. Zwischen einer am vertikalen L-Schenkel des Auslegers angebrachten horizontalen Schwenkachse und dem vertikalen Abschnitt der U-förmigen Armlagerung ist, als Bestandteil einer Überlastsicherung gegen zu hohe vertikale Lasten, eine Blattfeder eingespannt, deren freie Enden sich an der Armlagerung abstützen. Dabei bewirkt die Blattfeder im Normallastbereich ein quasi starres und im Überlastbereich ein begrenzt nachgiebiges Widerlager für den horizontalen Arm des L-förmigen Auslegers.

Die in der DE-33 30 988 A1 beschriebene U-förmige Armlagerung ist zwar bezüglich ihrer Verwindbarkeit elastisch, ist jedoch mittels Schrauben fest mit der Wägezelle verbunden. Dadurch besteht die Gefahr, dass Deformationen der U-förmigen Armlagerung, zwar in abgeschwächter Form, jedoch direkt in den Lastaufnahmebereich der Wägezelle eingeleitet werden und dort auf die Biegegelenke wirken. Im weiteren ist die die Überlastsicherung auslösende Kraft lageabhängig, das heisst je näher ihr Angriffspunkt zur Armlagerung zu liegen kommt, desto höher wird diese Kraft. Die in der DE-33 30 988 A1 offenbarte Waage bietet ausserdem keine Lösung zum Schutz der empfindlichen Biegelager der Wägezelle gegen zu hohe vertikal in einer zur Richtung der Lastwirkung entgegengesetzten Richtung eingeleitete Kräfte. Solche Kräfte können auftreten, wenn beispielsweise beim Transport der Waage in ihrer Verpackung, letztere plötzlich mit dem Boden nach oben positioniert wird, die Waage sozusagen auf den Kopf gestellt wird, insbesondere wenn dann die Waage noch einer beschleunigten Bewegung ausgesetzt ist.

Aufgabe der vorliegenden Erfindung ist es, für eine Waage, welche über einen Ausleger für die Anordnung einer Kalibriervorrichtung und/oder einer Waagschale verfügt, eine Vorrichtung zu schaffen, die unter weitest gehender Vermeidung einer Restmomentrückführung auf die Wägezelle bei gleichzeitig hoher Beweglichkeit in alle Richtungen, die Wägezelle mit dem Ausleger und/oder der Waagschale koppelt.

Diese Aufgabe wird erfindungsgemäss gelöst durch eine Waage mit einer einen vertikal auslenkbaren Lastaufnehmer aufweisenden Wägezelle, mit einer Waagschale zur Aufnahme von Wägegut und mit einem Trägerelement zur Ankopplung der Waagschale an dem vertikal auslenkbaren Lastaufnehmer der Wägezelle, wobei ein mit einer Auflage für mindestens ein Kalibriergewicht einer Kalibriervorrichtung versehener Ausleger fest mit dem Trägerelement verbunden ist. Es ist eine Koppelanordnung vorhanden, mittels welcher das Trägerelement zur Krafteinleitung in die Wägezelle in drei ein sich in einer Ebene orthogonal zur Symmetrieebene der Wägezelle erstreckendes und bezüglich dieser symmetrisch angeordnetes gleichschenkliches Dreieck bildenden Punkten reibungsarm beweglich an dem Lastaufnehmer geführt und in Richtung der Lastwirkung an dem Lastaufnehmer abgestützt ist.

Die reibungsarme Führung und die punktweise Abstützung des Trägerelements am Lastaufnehmer gewährleisten, dass die durch eine Last auf der Waagschale oder das mindestens eine Kalibriergewicht erzeugten Kräfte bei gleichzeitig hoher Beweglichkeit des Trägerelements weitgehend störungsfrei in das Messsystem, d.h. den Lastaufnehmer der Wägezelle eingeleitet werden. Alle wirkenden Kräfte sind durch die Anordnung spielfrei aufgehoben, es herrscht ein definierter Krafteinfluss auf die Wägezelle.

Die Koppelanordnung, oder Anordnung zur Kopplung des Trägerelements am Lastaufnehmer der Wägezelle, zeichnet sich in besonders vorteilhafter Weise dadurch aus, dass die Führung des Trägerelements am Lastaufnehmers für eine Verringerung der Reibung durch rollende Elemente, insbesondere Kugeln, realisiert wird.

Dies führt letztendlich zu einer Waage mit einer hohen Reproduzierbarkeit bei hoher Auflösung, was bedeutet, dass eine hochauflösende Wägezelle in ihrem Potential vollständig genutzt werden kann.

Durch die Beweglichkeit des Trägerelements insbesondere in der zur Richtung der Lastwirkung entgegengesetzten Richtung wird ein auf den Kopf stellen der Waage beim Transport ohne schädliche Auswirkungen auf die Wägezelle bleiben, da das bewegliche Trägerelement in einem solchen Fall sich kräftemässig von der Wägezelle entkoppelt.

Ist nun für eine Waage vorgesehen, die Waagschale nicht mit dem wägezellenfernen Ende eines Auslegers für eine Kalibriervorrichtung zu verbinden, sondern diese an dem Trägerelement abnehmbar anzukoppeln, insbesondere einzuhängen, so ist die freie Beweglichkeit des Trägerelements in der zur Richtung der Lastwirkung entgegengesetzten Richtung - das heisst im Falle einer für den Betrieb aufgestellten Waage nach oben - besonders vorteilhaft. Es könnte sich nämlich ergeben, dass beim nicht sachgerechten Entfernen der Waagschale vom Trägerelement oder Anbringen der Waagschale am Trägerelement eine Kraft nach oben auf das Trägerelement wirkt, für welche es zu vermeiden gilt, dass sie vom Lastaufnehmer der Wägezelle aufgenommen wird und in die empfindlichen Biegegelenke zerstörend eingeleitet wird. Dies wird jedoch bei der erfindungsgemässen Waage vermieden, da das bewegliche Trägerelement in einem solchen Fall sich kräftemässig von der Wägezelle entkoppelt. Insbesondere ist ein gehäusefester Anschlag vorhanden, der im Falle von zu hohen vertikal nach oben wirkenden Kräften diese aufnimmt.

In einer vorteilhaften Ausführungsform der erfindungsgemässen Waage ist eine Überlastsicherung in das Trägerelement integriert, die vor zu hohen auf die Waagschale einwirkenden Kräften in vertikaler Richtung nach unten schützt. Seitlich eingeleitete Störkräfte werden ebenfalls systemschonend auf das Gehäuse abgeleitet.

Das Trägerelement zeichnet sich dadurch aus, dass es als Montageeinheit vollständig lösbar vom Lastaufnehmer der Wägezelle ohne Hilfsmittel, wie beispielsweise Werkzeuge, installiert werden kann. Dies erhöht insbesondere die Servicefreundlichkeit einer solchen Waage, da im Vergleich zum Stand der Technik, hier keine Schrauben am empfindlichen Teil der Wägezelle gelöst werden müssen.

Das Trägerelement übernimmt die thermische Entkoppelung der Waagschale von der Wägezelle, ist aber gleichzeitig in definierter Weise elektrisch leitend an dieser abgestützt, damit die Waagschale geerdet ist und somit elektrostatische Aufladungen definiert abgeleitet werden können.

In einer bevorzugten Ausführungsform besteht das Trägerelement aus einem Koppelelement und einem Grundkörper, wobei letzterer relativ zum Koppelelement nahezu reibungsfrei beweglich ist. Dabei ist das Koppelelement aus einer Vertikal-Achse und einem Horizontal-Steg bestehend T-förmig ausgestaltet. Die innerhalb des Trägerelements angeordnete Führung des Grundkörpers bezüglich des Koppelelements kann durch rollende Elements, insbesondere Kugeln, ausgestaltet werden. Dies hat den Vorteil, dass das Trägerelement kompakt gehalten werden kann.

Durch diese extrem reibungsarme Führung ist im Falle einer auf den Ausleger wirkenden Überlast, die die Überlastsicherung auslösende Kraft lageunabhängig, das heisst unabhängig vom Ort ihrer Einleitung auf den Ausleger.

In einer besonders bevorzugten Weiterbildung der Waage ist die Waagschale am Trägerelement in drei ein sich in einer Ebene orthogonal zur Symmetrieebene der Wägezelle erstreckendes und bezüglich dieser symmetrisch angeordnetes gleichschenkliches Dreieck bildenden Punkten abgestützt, wobei es besonders vorteilhaft ist, wenn am Trägerelement eine um die Vertikal-Achse horizontal verschwenkbare Wippe vorhanden ist, mittels derer eine am Trägerelement eingehängte Waagschale flexibel geführt ist.

Eine besonders vorteilhafte Ausgestaltung einer erfindungsgemässen Waage besteht darin, den Wägeraumboden frei von irgendwelchen Durchführungen zu halten. Somit kann die Reinigungsfreundlichkeit des Wägeraumes markant verbessert werden.

Die Erfindung wird anhand von Ausführungsbeispielen einer erfindungsgemässen Waage, insbesondere eines erfindungsgemässen Trägerelements im folgenden in den stark schematisierten Zeichnungen dargestellt. Es zeigen:
- Figur 1: eine Seitenansicht der Waage,
- Figur 2: eine Wägezelle, ein mit einem Ausleger versehenes Trägerelement und einem daran angebrachtem Waagschalenträger einer erfindungsgemässen Waage in der Seitenansicht,
- Figur 3: ein Koppelelement in einer am oberen Vorsprung des Lastaufnehmers eingehängten Position, in einer Schnittzeichnung senkrecht zur Richtung des Pfeils A in Figur 2,
- Figur 4: eine Aufsicht auf den Lastaufnehmer mit eingehängtem Trägerelement,
- Figur 5: eine Aufsicht auf den Lastaufnehmer ohne Trägerelement,
- Figur 6a: eine Aufsicht auf den Lastaufnehmer ohne Trägerelement in einer einfachen Ausführungsform,
- Figur 6b: eine Schnittzeichnung durch den Lastaufnehmer, sowie das Koppelelement, im oberen Bereich entlang der Verbindung II - II und im unteren Bereich entlang der Verbindungslinie I - I aus Figur 3, in einer Ausführungsform gemäss Figur 6a,
- Figur 7: eine Sicht auf das gesamte Trägerelement in Richtung des Pfeils A in Figur 1, wobei der mittlere Bereich teilweise angeschnitten gezeichnet ist,
- Figur 8: eine Schnittzeichnung entlang der Verbindung IV - IV in Figur 7,
- Figur 9: einen Ausschnitt einer Schnittzeichnung durch den Grundkörper und die Vertikal-Achse in einer Ebene senkrecht zu derselben,
- Figur 10: eine Schnittzeichnung durch den unteren Bereich des Trägerelements in der Ebene senkrecht zur Vertikal-Achse
- Figur 11: eine Schnittzeichnung durch den unteren Bereich des Grundkörpers entlang der Vertikal-Achse analog Figur 8
- Figur 12: eine dreidimensionale Darstellung einer Waagschale in einer Ausführungsform mit integrierter Dreipunktauflage

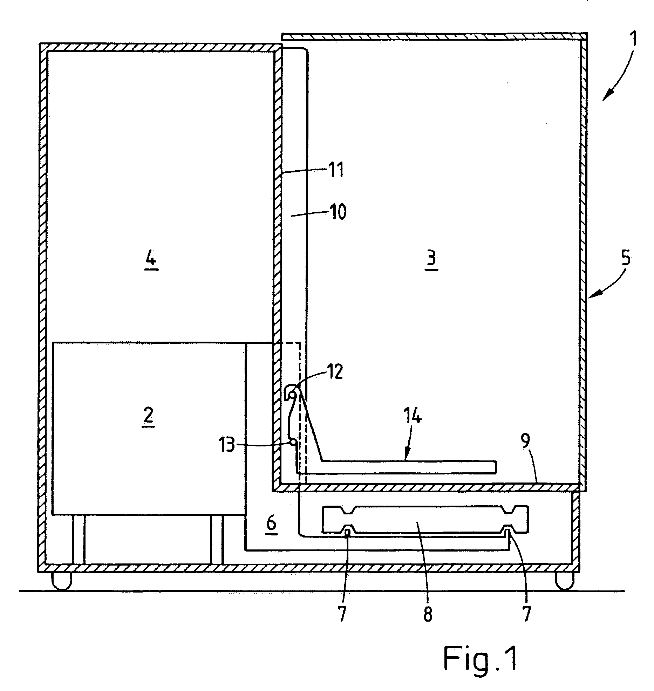

Die Figur 1 zeigt eine Seitenansicht der Waage 1 mit dem Waagengehäuse 4 und dem den Wägeraum 3 umgebenden Windschutz 5. Im in der Zeichnung links eingezeichneten Teil des Waagengehäuses 4 befindet sich die nicht näher dargestellte Wägezelle 2. Mit der Wägezelle 2 ist zur Krafteinleitung ein L-förmiger Ausleger 6 mit einer Kalibriervorrichtung verbunden, wobei im unteren Bereich des Auslegers 6 eine Auflage 7 für mindestens ein Kalibriergewicht 8 vorgesehen ist. Die Kalibriervorrichtung befindet sich in einem oben durch den Boden 9 des Wägeraumes 3 abgeschlossen Teil des Waagengehäuses 4. Am senkrechten Teil des L-förmigen Auslegers 6 ragen aus einem Vorsprung 10 in der Rückwand 11 des Wägeraums 3 durch seitliche Durchführungen Haltebolzen 12, an welchen eine Waagschale 14 eingehängt werden kann, und Abstützbolzen 13 für die Waagschale heraus. Die Waagschale 14 kann als Auflage für die verschiedensten Aufsätze zu unterschiedlichen Anwendungen, beispielsweise für Schalen, Laborgefässe, sonstige Behälter für Wägegüter oder für Wägegüter selbst dienen. Der Wägeraum 3 einer solche Waage 1 ist besonders einfach zu reinigen.

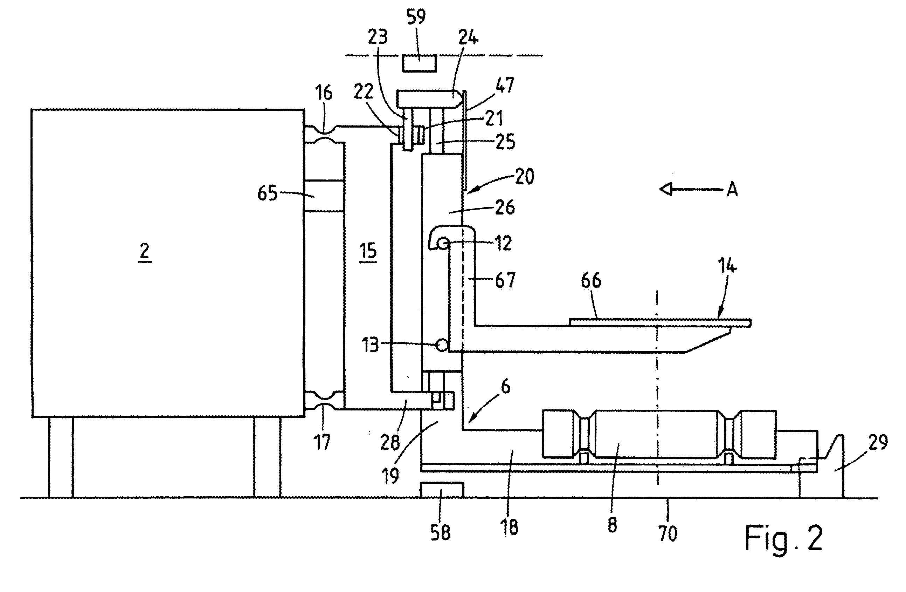

Die Figur 2 zeigt die Waage 1 in der Seitenansicht bei abgenommenem Waagengehäuse 4 und Windschutz 5. Die Wägezelle 2 ist, wie in der Figur 1, stark schematisiert dargestellt. Es sind hier lediglich noch die dem vertikal beweglichen Lastaufnehmer 15 zugewandten Bieggelenke 16, 17 einer beispielsweise nach dem Prinzip der elektromagnetischen Kraftkompensation arbeitenden Wägezelle zu sehen. Wie aus dem Stand der Technik bekannt ist, weist eine solche Wägezelle ein Parallelogramm auf, das über obere Biegegelenke 16 und untere Biegegelenke 17 den vertikal beweglichen Lastaufnehmer 15 mit dem gehäusefesten Teil der Wägezelle 2 verbindet. Das Hebelsystem der Wägezelle 2 ist durch die Verbindung 65 zum vertikal auslenkbaren Lastaufnehmer 15 angedeutet. Der zur Krafteinleitung mit der Wägezelle 2 verbundene L-förmige Ausleger 6 weist an seinem horizontalen Schenkel 18 die Kalibriervorrichtung mit mindestens einem Kalibriergewicht 8 auf. An seinem äusseren Ende wird der horizontale Schenkel 18 des L-förmigen Auslegers 6 in seiner seitlichen Beweglichkeit nach beiden Richtungen begrenzt. Hierfür ist am Gehäuseboden 70 eine Nase 29 angebracht, welche der an seinem äusseren Ende gabelförmig ausgebildete horizontale Schenkel 18 des L-förmigen Auslegers 6 umgreift. Der vertikale Schenkel 19 des L-förmigen Auslegers 6 ist fest mit einem Trägerelement 20 verbunden, beispielsweise verschraubt.

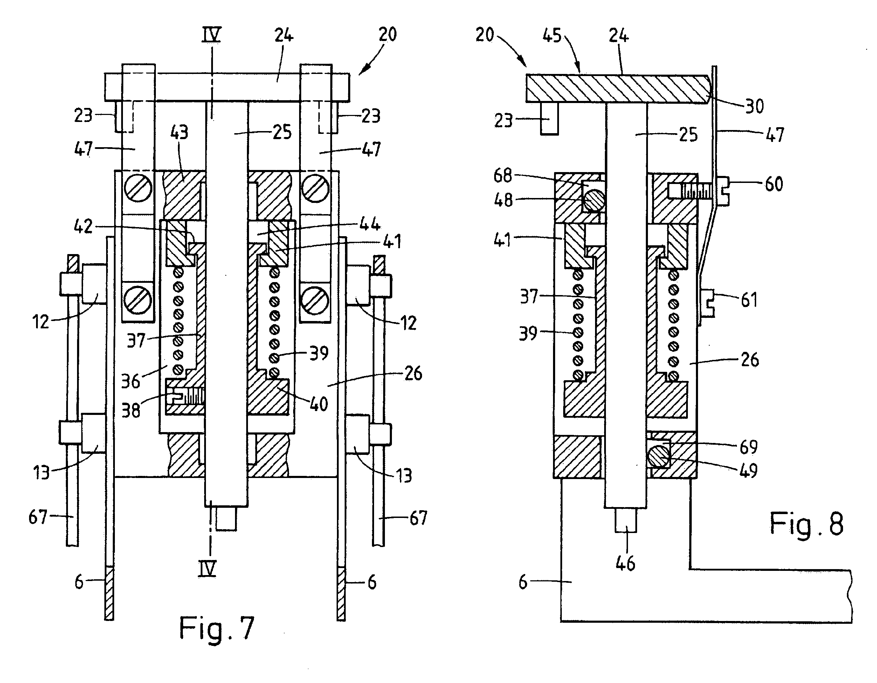

Das Trägerelement 20 ist an dem Lastaufnehmer 15 an dessen oberem und unterem Ende, vorzugsweise etwa in Höhe der jeweiligen Biegegelenke 16, 17 des Parallelogramms der Wägezelle 2 angekoppelt. Hierfür weist der Lastaufnehmer 15 in einem oberen Vorsprung 21 zwei voneinander in horizontaler Richtung beabstandete Öffnungen 22 auf, in welche je ein Einhängzapfen 23 des Trägerelements 20 eingreift (in der Figur ist jeweils nur eine Öffnung 22 und ein Einhängzapfen 23 zu sehen). Diese Einhängzapfen 23 sind, ebenfalls voneinander beabstandet, starr an einem Horizontal-Steg 24 des Trägerelements 20 befestigt. Der Horizontal-Steg 24 ist in seiner Mitte mit dem oberen Ende einer Vertikal-Achse 25 fest verbunden. Horizontal-Steg 24 und Vertikal-Achse 25 bilden somit ein T-förmiges Koppelelement, zu welchem ein von der Vertikal-Achse 25 durchstossener Grundkörper 26 des Trägerelements 20 vertikal bewegbar ist, wie weiter unten anhand der Figuren 7 bis 9 näher erläutert wird. Die Vertikal-Achse 25 ist an ihrem unteren Ende an einem unteren Vorsprung 28 des Lastaufnehmers 15 gelagert.

Die Waagschale setzt sich aus zwei L-förmigen, mit Haken versehenen Holmen 67 und der Auflageebene 66 zusammen. Für das Einhängen der Waagschale 14 sind seitlich am Trägerelement 20 die Haltebolzen 12 angebracht. Das Gehäuse einer erfindungsgemässen Waage ist so ausgebildet, dass die Haltebolzen 12, sowie auch die Abstützbolzen 13 durch Durchführungen an den Seiten eines Vorsprungs 10 der Rückwand 11 in den Wägeraum 3 ragen. Dabei befindet sich das Trägerelement 20, zumindest teilweise, im waagengehäuseseitigen Innern des Vorsprungs 10 der Rückwand 11 (siehe Figur 1).

Der Gewichtsschwerpunkt der Kalibriergewichte 8 befindet sich vorzugsweise senkrecht unterhalb des Flächenschwerpunkts der Auflageebene 66 der Waagschale 14, was in der Figur durch die strichpunktierte Vertikallinie angedeutet ist.

An dem in der Figur 2 durch eine waagrechte Linie angedeuteten Gehäuseboden 70 ist ein Anschlag 58, als Teil einer Überlastsicherung gegen zu hohe auf die Waagschale 14 aufgelegte Lasten, angebracht. Ebenso zeigt die Figur einen Anschlag 59, welcher die Auslenkung des Trägerelements 20 infolge von vertikal nach oben gerichteten Kräften begrenzt. Der Anschlag 59 ist ebenfalls gehäusefest angebracht, was in der Figur durch die gestrichelte Linie gekennzeichnet ist.

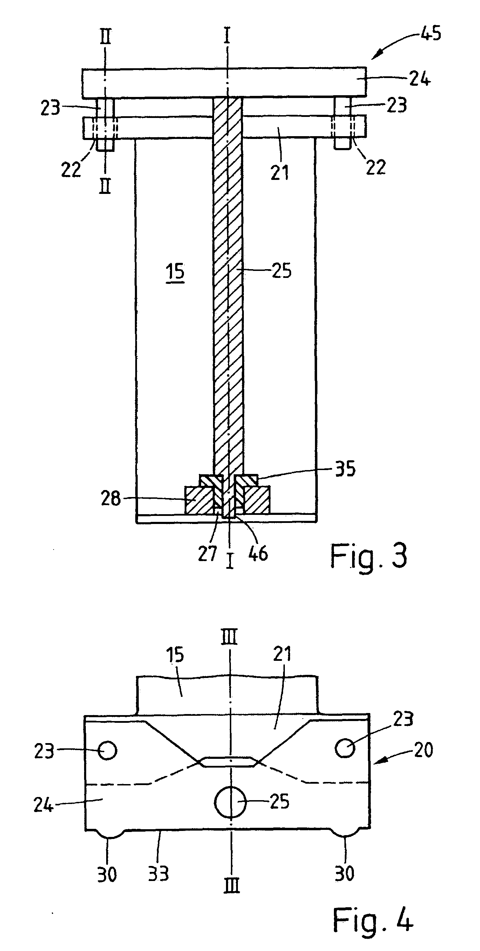

Die Figur 3 zeigt das T-förmige Koppelelement 45 (der Grundkörper 26 des Trägerelements 20 ist aus Gründen der Übersichtlichkeit hier weggelassen) in einer am oberem Vorsprung 21 des Lastaufnehmers 15 eingehängten Position aus Sicht in Richtung des Pfeils A in Figur 2. Die Vertikal-Achse 25 sowie der untere Vorsprung 28 das Lastaufnehmers 15 sind dabei geschnitten gezeichnet. Die strichpunktiert eingezeichnete Verbindungslinie I - I kennzeichnet hier die Symmetrieebene bezüglich derer die Wägezelle 2, wie auch das gesamte Trägerelement 20, sowie weitere Elemente des Wägesystems spiegelsymmetrisch angeordnet sind und die in einer zu der in der Figur gezeigten Ansicht senkrechten Ebene verläuft. Der starr mit der Vertikal-Achse 25 verbundene Horizontal-Steg 24 erstreckt sich symmetrisch nach beiden Seiten senkrecht zur Vertikal-Achse 25 und zur Symmetrieebene der Wägezelle. An seinen äusseren Enden sind die Einhängzapfen 23 befestigt. Sie greifen durch die Öffnungen 22 in dem oberen Vorsprung 21 des Lastaufnehmers 15 und sind dort lose aber definiert gelagert. Der obere Vorsprung 21 des Lastaufnehmers 15 ist - wie aus der Figur ersichtlich - gegenüber dem restlichen Lastaufnehmer 15 verbreitert (siehe auch in den Figuren 4, 5 und 6a).

Am unteren Ende des T-förmigen Koppelelements 45 ist der Durchmesser der Vertikal-Achse 25, einen Dorn 46 bildend, verringert. Dieser Dorn 46 greift in ein Lagerelement 35, welches vorzugsweise aus hochohmig leitfähigem Kunststoff gefertigt ist, ein. Das Lagerelement 35 stützt sich in einer Bohrung 27 im unteren Vorsprung 28 des Lastaufnehmers 15 ab. Die Abstützung des Koppelelments 45 und damit des gesamten Trägerelements 20 am Lastaufnehmer 15 erfolgt somit über drei Punkte, wobei keine feste Verbindung zwischen Lastaufnehmer 15 und Trägerelement 20 besteht, sondern das Trägerelement 20 am Lastaufnehmer 15 lediglich geführt beziehungsweise abgestützt ist.

Die Figur 4 gewährt eine Sicht von oben auf den Lastaufnehmer 15 mit eingehängtem Trägerelement 20. Hier kennzeichnet wiederum die strichpunktierte Verbindungslinie III - III den Verlauf der Symmetrieebene der Wägezelle (analog der Verindungslinie I - I in Figur 3). Es wird hier insbesondere die Ausformung des Horizontal-Stegs 24 erkennbar. Von besonderer Bedeutung, wie weiter unten anhand der Figur 8 im Detail erläutert wird, sind die zwei Wölbungen 30 an der im eingebauten Zustand zur Waagschale weisenden Vorderseite 33 des Horizontal-Stegs 24. Die beiden Wölbungen 30 befinden sich jeweils im gleichen Abstand von der Symmetrieebene der Wägezelle, wie die beiden Einhängzapfen 23. Sie dienen in Zusammenwirken mit jeweils einer Blattfeder 47 (siehe Figur 2) der Justierung des Trägerelements 20 mitsamt dem Ausleger 6 und der Waagschale 14.

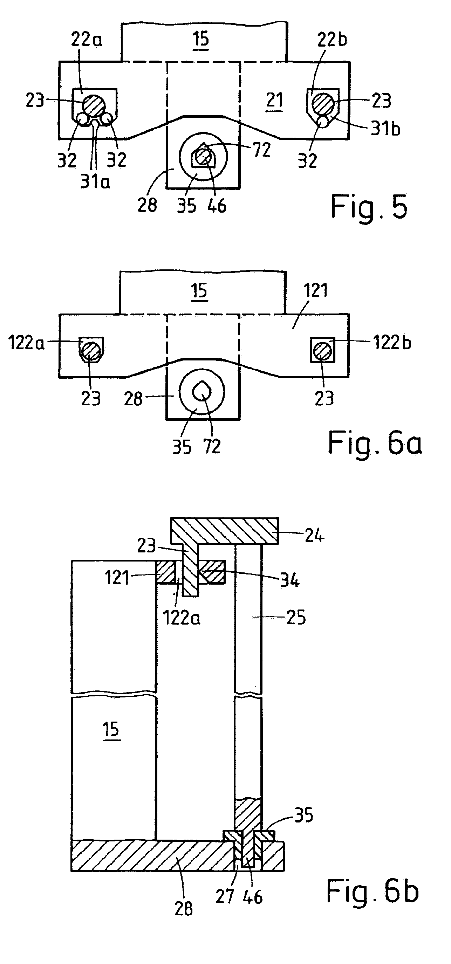

Die Figur 5 zeigt den Lastaufnehmer 15 in der Aufsicht. Insbesondere sind die im oberen Vorsprung 21 des Lastaufnehmers 15 vorgesehenen Lagerstellen für das Koppelelement 45 des Trägerelements 20 zu sehen. Die Öffnungen 22a und 22b für die Aufnahme der Einhängzapfen 23 (welche zur Verdeutlichung in der Figur mit eingezeichnet sind) sind in besonderer Weise ausgestaltet. So weist die gegenüber dem Durchmesser eines Einhängzapfens 23 relativ geräumige Öffnung 22a einen etwa rechteckigen Querschnitt auf, in welchen auf einer Seite jedoch zwei Ausnehmungen 31 a eingearbeitet sind. In jeder dieser Ausnehmungen 31 a ist je eine Kugel 32 aus isolierendem Material, beispielsweise Glas oder Keramik eingebracht und wird durch einen Käfig (hier nicht sichtbar) gehalten. In analoger Weise besitzt die Öffnung 22b eine Ausnehmung 31 b, in welcher ebenfalls eine isolierende Kugel platziert und ebenfalls durch einen Käfig gehalten ist. Ein solcher Käfig kann beispielsweise in einfacher Weise als im Bereich einer Öffnung 22a, 22b um den oberen Vorsprung 21 gelegte Manschette aus dünnem Blech ausgestaltet sein, wobei die entsprechenden Öffnungen der Manschette im Bereich der Ausnehmungen 31a, 31 b etwas kleiner sind, als die des Vorsprungs 21, so dass die isolierenden Kugeln 32 in ihrer Position gehalten werden. Die Einhängzapfen 23 sind ausschliesslich auf den isolierenden Kugeln 32 punktweise gelagert, das heisst sie berühren die jeweiligen Kugeln 32 immer nur in einem Punkt, und sind somit vom Lastaufnehmer 15 sowohl thermisch als auch elektrisch isoliert.

Die Kugeln 32 sind innerhalb des Käfigs soweit beweglich, dass sie eine Rollbewegung ausführen können. Eine durch Deformation des T-förmigen Koppelelements 45 erzeugte Vertikalverschiebung der Einhängzapfen 23 nach unten wird durch eine Rollbewegung der Kugeln 32 (mit geringstem Widerstand) aufgefangen, so dass die die Deformation erzeugenden Kräfte nicht auf den Lastaufnehmer 15 übertragen werden.

Die am unteren Vorsprung 28 mittig angebrachte Lagerstelle des Koppelelements 45 beziehungsweise der Vertikal-Achse 25 besteht, wie oben erwähnt, aus der Bohrung 27 und dem Lagerelement 35. Das Lagerelement 35 ist vorzugsweise aus einem hochohmig leitenden Polymermaterial oder aus entsprechendem Keramikmaterial gefertigt. Durch diese wohldefinierte Leitfähigkeit ist das Koppelelement 45 und eine am Trägerelement 20 angebrachte Waagschale 14 geerdet, so dass auf der Waagschale 14 erzeugte elektrostatische Aufladungen abgeleitet werden können. Der elektrische Widerstand kann durch Auswahl des leitfähig gemachten Kunststoffmaterials variiert werden. Ausserdem bewirkt das Lagerelement 35 die thermische Entkopplung des gesamten Trägerelements 20 vom Lastaufnehmer 15. Das Lagerelement 35 besitzt ein Durchgangsloch 72, in welches der hier der Anschaulichkeit halber eingezeichnete Dorn 46 der Vertikal-Achse 25 eingreift. Das Durchgangsloch 72 ist an seiner der Wägezelle 2 zugewandten Seite V-förmig ausgespart, so dass der Dorn 46 eindeutig positioniert gelagert ist und somit auch hier das Koppelelement 45 eine Führung erfährt.

Insofern definiert die beschriebene Lagerung des T-förmigen Koppelelements 45 und damit des gesamten Trägerelements 20 am Lastaufnehmer 15 eine eindeutige Position, in welche das Trägerelement 20 durch seitliches Ausschwenken immer wieder in seine ursprüngliche Lage zurückfällt. Das Ausschwenken verhindert somit eine Übertragung von horizontalen Kraftkomponenten auf den Lastaufnehmer 15 und schützt dadurch auch vor unbeabsichtigter Krafteinwirkung.

Die Form der Lagerstellen für das T-förmigen Koppelelement 45 am Lastaufnehmer 15 kann in verschiedenen Varianten ausgestaltet sein. Die Figuren 6a und 6b zeigen hierfür eine einfache Ausführungsform, die das Prinzip der Lagerung des Koppelelements 45 im vertikal beweglichen Lastaufnehmer 15 der Wägezelle 2 besonders gut verdeutlicht. Analog der Darstellung in Figur 5 zeigt die Figur 6a den Lastaufnehmer 15 in der Aufsicht. Die Figur 6b zeigt einen Längsschnitt durch den vertikal beweglichen Lastaufnehmer 15, im oberen Bereich entlang der Verbindung II - II und im unteren Bereich entlang der Verbindungslinie I - I aus Figur 3. Die Lagerung der Einhängzapfen 23 im oberen Vorsprung 121 des Lastaufnehmers 15 ist in der Öffnung 122a auf einen Berührungspunkt durch das Vorhandensein einer Kante 34 (Figur 6b) in dem zum Koppelelement 45 weisenden Bereich der Öffnung 122a gewährleistet. Die mit einem rechteckigen oder quadratischen Querschnitt versehene Öffnung 122b kann ebenfalls über eine solche Kante verfügen. Am unteren Vorsprung 28 greift die Vertikal-Achse 25 lediglich mit dem Dorn 46 (hier nicht gezeigt) in das in der Bohrung 27 eingebrachte Lagerelement 35 ein und stützt sich so am diesem ab. Das Durchgangsloch 72 des Lagerelements 35 ist im wesentlichen rund und weist einen V-förmigen mit seiner Spitze in Richtung der Wägezelle 2 weisenden Ausschnitt zur Führung des Dorns 46 der Vertikal-Achse 25 auf.

Die Figur 7 zeigt das gesamte Trägerelement 20 in einer Ansicht in Richtung des Pfeils A in Figur 2. Der in der Mitte des Trägerelements 20 liegende Bereich ist in der Figur teilweise angeschnitten gezeichnet. Der L-förmige Ausleger 6 und die Holmen 67 der Waagschale 14 sind dabei lediglich in gebrochener Darstellungsweise angedeutet. Der Grundkörper 26 des Trägerelements 20 weist in seiner Mitte eine Durchbrechung 36 auf, durch deren Zentrum die Vertikal-Achse 25 geführt ist. Der Grundkörper 26 ist ebenfalls spiegelsymmetrisch bezüglich der in den Figuren 3 und 4 eingezeichneten Symmetrieebene der Wägezelle.

Die Vertikal-Achse 25 ist im Grundkörper 26 relativ zu diesem in vertikaler Richtung beweglich geführt. Der Grundkörper 26 weist eine Durchbrechung 36 auf, innerhalb derer eine mittels einer Schraube 38 an der Vertikal-Achse 25 befestigbare Hülse 37 angeordnet ist. Eine Spiralfeder 39 stützt sich am einen Ende auf dem Flansch 40 der Hülse 37 ab und drückt mit ihrem anderen Ende gegen den am oberen Querbereich 43 des Grundkörpers 26 in Anlage befindlichen Ring 41. Eine definierte Vorspannung der Spiralfeder 39 wird dadurch eingestellt, dass sie zwischen dem Flansch 40 und dem Ring 41 auf eine definierte Länge zusammengedrückt wird.

Diese Vorrichtung ist Bestandteil einer Überlastsicherung. Bei zu hohen auf die Waagschale 14 aufgelegten Lasten nimmt die Spiralfeder 39 die überschüssige Energie durch eine Verformung auf, wobei der sich am oberen Ende der Hülse befindliche Kragen 42 in einem Freiraum 44 des Rings 41 in vertikaler Richtung gleiten kann. Auf diese Weise können die zu hohen Kräfte erst gar nicht in den Lastaufnehmer 15 gelangen. Gleichzeitig schlägt der vertikal nach unten bewegte Ausleger 6 an dem sich am Boden des Gehäuses befindlichen Anschlag 58 (siehe Figur 2) an.

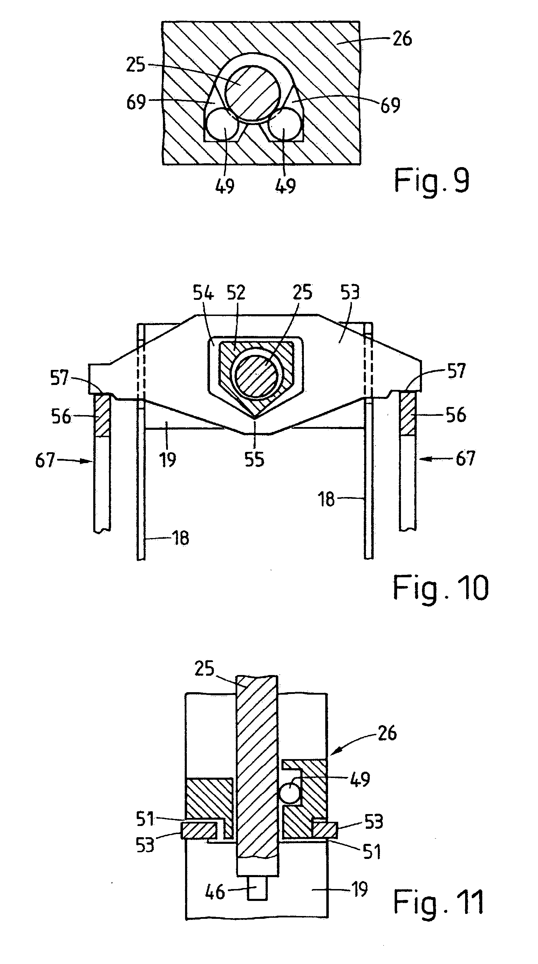

In etwa mittlerer Höhe ragt aus dem Grundkörper 26 seitlich je ein Haltebolzen 12 für die Waagschale 14 hervor, der sich nach aussen, einen Absatz bildend, verschmälert. Auf diese Weise wird gewährleistet, dass eine eingehängte Waagschale 14 stets zentriert ist. Ähnlich ausgebildete Abstützbolzen 13, die parallel zu den Haltebolzen 12 am unteren Ende des Grundkörpers 26 angeordnet sind, dienen vorzugsweise der Abstützung der Waageschale 14 (siehe Figuren 1 und 2). Hierfür kann jedoch auch eine flexible Lösung vorgesehen sein, wie weiter unten anhand der Figuren 10 und 11 beschrieben wird.

Die Figur 8 zeigt in einer Schnittzeichnung entlang der Verbindungslinie IV - IV in Figur 7 das Kopplungselement 20 (Es ist zu beachten, dass die Verbindungslinie IV - IV nicht in der Symmetrieebene der Wägezelle liegt.). Die Zeichnung verdeutlicht hier einerseits die vertikale Führung der Vertikal-Achse 25 und andererseits die rückführbare Lagerung des Grundkörpers 26 mitsamt dem L-förmigen Ausleger 6 gegenüber dem Koppelelement 45, bestehend aus der Vertikal-Achse 25 und dem Horizontal-Steg 24. Eine im mittleren Bereich des Grundkörpers 26 mittels einer Schraube 61 befestigte Blattfeder 47, welche nach aussen gespannt ist und mittels der Schraube 60 in eine definierte Lage justierbar ist, erstreckt sich über den Grundkörper 26 hinaus und kommt an dem zur Waagschale 14 weisenden Ende des Horizontal-Stegs 24 zu liegen. Die Anlage der Blattfeder 47 am Horizontal-Steg 24 erfolgt an den in Figur 4 gezeigten Wölbungen 30, die wie hier und aus Figur 4 ersichtlich ist, sowohl in horizontaler als auch in vertikaler Richtung gewölbt sein können. Somit liegt eine Blattfeder 47 nur an einem Punkt der Wölbung 30 an. Dadurch kann der Grundkörper 26 im Überlastfall nahezu reibungsfrei gegenüber der Vertikal-Achse 25 und dem Horizontal-Steg 24 vertikal verschoben werden. Gleichzeitig liefert die Blattfederkonstruktion die notwendige Rückstellkraft für ein Verdrehen des Grundkörpers 26 gegenüber der Vertikal-Achse 25, um den Grundkörper 26 und den damit verbundenen L-förmigen Ausleger 6 wieder in ihre ursprüngliche Lage zu bringen.

Die Vertikal-Achse 25 ist oben und unten jeweils wenige Millimeter vom oberen und unteren Rand des Grundkörpers 26 entfernt, durch jeweils ein Kugelpaar 48, 49 (nur jeweils eine Kugel ist in der Figur zu sehen), welches sich jeweils in einer entsprechenden Aussparung 68, 69 des Grundkörpers 26 befindet, geführt. Dabei bilden, wie die Figur 9 in einem Schnitt durch den Grundkörper 26 im Bereich der Vertikal-Achse 25 zeigt, die Vertikal-Achse 25 in der zu ihr orthogonalen Ebene und die beiden Kugeln eines Kugelpaares 48, 49 jeweils ein Dreieck, wobei die beiden unteren Kugeln zur Waagschale 14 weisen und die beiden oberen zur Wägezelle 2.

Die vertikale Beweglichkeit der Kugelpaare 48, 49 in ihrer jeweiligen Aussparung beträgt ca. 1 bis 2 Millimeter. Bewegt sich nun die Vertikal-Achse 25 nach unten, so rollen die Kugeln 48, 49 an dieser und an der Wand der jeweiligen Aussparung 68, 69 entlang nach oben beziehungsweise umgekehrt. Auf diese Weise ist die Vertikal-Achse 25 mit geringster Reibung, d.h. lediglich mit dem Rollwiderstand der Kugelpaare 48, 49 im Grundkörper 26 vertikal beweglich. Da die durch den Ausleger erzeugten auf die Vertikal-Achse wirkenden Kräfte in horizontaler Richtung immer auf die Kugelpaare 48, 49 drücken, liegen die Kugelpaare jeweils spielfrei zwischen der Wandung ihrer Aussparung 68, 69 und der Achse. Somit ist die Lagerung des Koppelelements 45 im Grundkörper 26 spielfrei.

Die leichtgängige vertikale Beweglichkeit der Vertikal-Achse 25 ist wichtig für ihre in Zusammenwirken mit der Spiralfeder 39 vorhandene Funktion als Überlastschutz gegen zu hohe vertikal nach unten angreifende Kräfte. Das Trägerelement 20 gewährleistet gleichzeitig auch einen Schutz gegen zu hohe vertikal nach oben angreifende Kräfte, deren Einleitung in die Wägezelle 2 deren empfindliche Lager ebenfalls schädigen könnte. Dadurch, dass das Trägerelement 20 lediglich mittels der Einhängzapfen 23 am oberen Vorsprung 22 des Lastaufnehmers 15 eingehängt ist und am unteren Vorsprung 28 über den Dorn 46 und das Lagerelement 35 abgestützt ist, löst es sich im Falle einer nach oben wirkenden Kraft aus dieser Kopplung, so, dass keine Kraftverbindung mehr zur Wägezelle 2 besteht, und schlägt am gehäusefesten oberen Anschlag 59 an. Die beiden Einhängzapfen 23 sowie der Dorn 46 sind in ihrer Länge jedoch so bemessen, dass sie in den Öffnungen 22, 22a, 22b, 122a, 122b beziehungsweise der Bohrung 27 verbleiben, wenn das Trägerelement 20 den oberen Anschlag 59 erreicht.

Die Figur 10 zeigt in einer Schnittzeichnung in der Ebene senkrecht zur Vertikal-Achse 25 eine weitere Form der Waagschalenführung am unteren Ende des Grundkörpers 26. Hier durchstösst die Vertikal-Achse 25 einen fünfeckigen innen hohlen Zapfen 52, welcher am unteren Ende aus dem Grundkörper 26 ragend fest mit diesem verbunden ist. Am Zapfen 52 ist eine, beispielweise aus einem Blech gefertigte Wippe 53 in einer ebenfalls fünfeckigen Öffnung 54 in ihrer Mitte gelagert, wobei die Wippe 53 um den Lager-Punkt 55 der Berührung von Wippe 53 und Zapfen 52 in der Ebene senkrecht zur Vertikal-Achse 25 kippbar ist. Eine eingehängte Waagschale 14 liegt mit ihrem vertikalen Holmenbereich 56 an den äusseren Anlagebereichen 57 der Wippe 53 an. Ein vertikales Herausgleiten der Wippe 53 aus dem Zapfen 52 wird durch einen Spalt 51 zur Führung der Wippe 53 im vertikalen L-Schenkel 19 des Auslegers 6 verhindert, wie die Schnittzeichnung durch den unteren Bereich des Grundkörpers in Figur 11 verdeutlicht.

Durch die Konstruktion der Wippe 53 ergibt sich für die Kopplung der Waagschale 14 am Trägerelement 20 eine Abstützung in drei Punkten, analog derjenigen des Trägerelements 20 am vertikal beweglichen Lastträger 15 der Wägezelle 2. Auch ist das aus diesen drei Punkten gebildete Dreieck symmetrisch bezüglich der oben erwähnten Symmetrieebene der Wägezelle und ist in einer zu dieser orthogonalen Ebene angeordnet.

Die Wippe 53 übernimmt die Übertragung der Kraft aus der Waagschale 14, welche über deren zwei Holmen 67 in den Grundkörper 26 des Trägerelements 20 eingeleitet wird. Mit der Wippe 53 wird erreicht, dass dieser Kraftfluss auf den Punkt 55 (siehe Figur 10) als Summe einfliesst. Auf diese Weise können mittels der Wippe 53 Deformationen der Waagschale 14 aufgefangen werden. Der Kraftfluss auf das Trägerelement 20 ist definiert. Bei einer Konstruktion der Abstützung der Waagschale 14 in vier Punkten hingegen, wie sie die in der Figur 7 dargestellte Ausführungsform zeigt, welche zwei Haltebolzen 12 und zwei Abstützbolzen 13 aufweist, ist der Kraftfluss nicht eindeutig definiert.

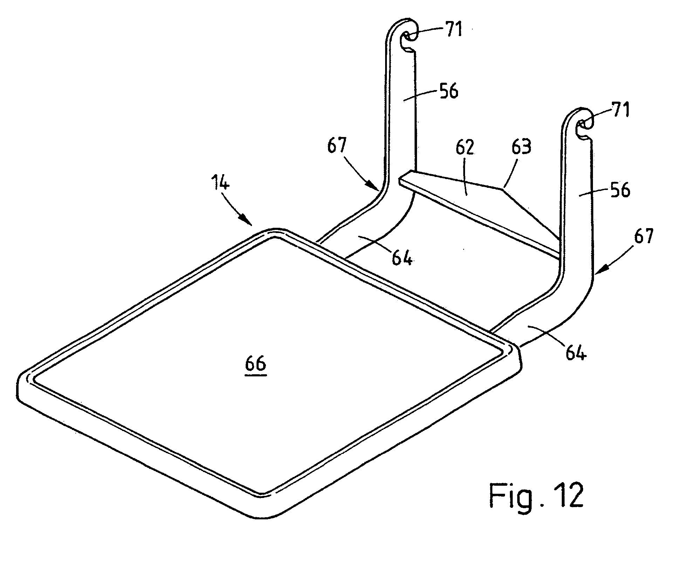

Eine Dreipunktauflage kann nun auch direkt in die Waagschale 14 integriert sein, wie die Figur 12 verdeutlicht. Hier ist in dreidimensionaler Darstellung eine Waagschale 14 gezeigt, welche am Übergang vom vertikalen Holmenbereich 56 zum jeweiligen horizontalen Holmenbereich 64 eine nahezu dreieckförmige Abstützplatte 62 aufweist, die zwischen den beiden Holmen 67 gelagert ist. Die der Waagschale 14 abgewandte Spitze 63 dieser Abstützplatte 62 kann als Dorn ausgebildet sein und sich direkt am Grundkörper 26 des Trägerelements 20 abstützen. Die anderen beiden Lagerpunkte für die Waagschale 14 sind durch die beiden an den Haltebolzen 12 des Grundkörpers 26 eingehängten Haken 71 der Holmen 67 gegeben. In jedem Fall liegt auch diese Dreipunktabstützung in einer zur Symmetrieebnen der Wägezelle orthogonalen Ebene.

Weitere Ausführungsformen einer Dreipunktabstützung einer abnehmbaren Waagschale am Trägerelement sind denkbar. So kann beispielsweise eine Waagschale mit zwei horizontalen Holmen für eine Ankopplung am unteren Bereich des Trägerelements ausgestaltet sein, wobei der dritte Abstützpunkt in der Symmetrieebene der Wägezelle liegend auf einem zwischen den Holmen befindlichen Quersteg angeordnet sein kann.

Es versteht sich von selbst, dass weitere Ausführungsformen beispielsweise des Lastaufnehmers, des Trägerelements und/oder der Waagschale Bestandteil einer erfindungsgemässen Waage sein können.

### Bezugszeichenliste

- 1: Waage
- 2: Wägezelle
- 3: Wägeraum
- 4: Waagengehäuse
- 5: Windschutz
- 6: L-förmiger Ausleger
- 7: Auflage
- 8: Kalibriergewicht
- 9: Boden des Wägeraums
- 10: Vorsprung in der Rückwand
- 11: Rückwand
- 12: Haltebolzen
- 13: Abstützbolzen
- 14: Waagschale
- 15: vertikal beweglicher Lastaufnehmer
- 16: Obere Biegegelenke
- 17: Untere Biegegelenke
- 18: horizontaler Schenkel des L-förmigen Auslegers
- 19: vertikaler Schenkel des L-förmigen Auslegers
- 20: Trägerelement
- 21: Oberer Vorsprung
- 22, 22a, 22b: Öffnung
- 23: Einhängzapfen
- 24: Horizontal-Steg
- 25: Vertikal-Achse
- 26: Grundkörper
- 27: Bohrung
- 28: Unterer Vorsprung
- 29: Nase
- 30: Wölbung
- 31, 31a, 31b: Ausnehmung
- 32: Isolierende Kugel
- 33: Vorderseite
- 34: Kante
- 35: Lagerelement
- 36: Durchbrechung
- 37: Hülse
- 38: Schraube
- 39: Spiralfeder
- 40: Flansch
- 41: Ring
- 42: Kragen
- 43: oberer Querbereich des Grundkörpers
- 44: Freiraum
- 45: T-förmiges Koppelelement
- 46: Dorn
- 47: Blattfeder
- 48: Kugelpaar oben
- 49: Kuglelpaar unten
- 51: Spalt
- 52: Zapfen
- 53: Wippe
- 54: fünfeckigen Öffnung
- 55: Lager-Punkt
- 56: vertikaler Holmenbereich der Waagschale
- 57: Anlagebereich der Wippe
- 58: Unterer Anschlag
- 59: Oberer Anschlag
- 60: Schraube
- 61: Schraube
- 62: Abstützplatte
- 63: Spitze des Dreiecks
- 64: horizontaler Holmenbereich der Waagschale
- 65: Verbindung
- 66: Auflageebene
- 67: Holmen
- 68: Obere Aussparung
- 69: untere Aussparung
- 70: Gehäuseboden
- 71: Haken
- 72: Durchgangsloch
- 121: Oberer Vorsprung
- 122a, 122b: Öffnung

## Patentansprüche

1. Waage mit einer einen vertikal auslenkbaren Lastaufnehmer (15) aufweisenden Wägezelle (2), mit einer Waagschale (14) zur Aufnahme von Wägegut und mit einem Trägerelement (20) zur Ankopplung der Waagschale (14) an dem vertikal auslenkbaren Lastaufnehmer (15) der Wägezelle (2), wobei ein mit einer Auflage (7) für mindestens ein Kalibriergewicht (8) einer Kalibriervorrichtung versehener Ausleger (6) fest mit dem Trägerelement (20) verbunden ist, wobei eine Koppelanordnung (22, 22a, 22b, 122a, 122b, 23, 35, 46) vorhanden ist, mittels welcher das Trägerelement (20) zur Krafteinleitung in die Wägezelle (2) in drei ein sich in einer Ebene orthogonal zur Symmetrieebene der Wägezelle (2) erstreckendes und bezüglich dieser symmetrisch angeordnetes gleichschenkliches Dreieck bildenden Punkten reibungsarm beweglich an dem Lastaufnehmer (15) geführt, und in Richtung der Lastwirkung an dem Lastaufnehmer(15) abgestützt ist.

2. Waage nach Anspruch 1, wobei die Waagschale (14) abnehmbar an dem Trägerelement (20) angebracht ist.

3. Waage nach Anspruch 1 oder 2, wobei die Waagschale (14) an seitlich am Trägerelement (20) angebrachten Haltebolzen (12) einhängbar ausgestaltet ist.

4. Waage nach Anspruch 1, 2 oder 3, wobei das Trägerelement (20) als vollständig entkoppelbare Montageeinheit, die hilfsmittelfrei am vertikal beweglichen Lastaufnehmer (15) der Wägezelle (2) abnehmbar installierbar ist, ausgebildet ist.

5. Waage nach einem der Ansprüche 1 bis 4, wobei das Trägerelement (20) zur Abstützung und Führung am vertikal beweglichen Lastaufnehmer (15) der Wägezelle (2) in mindestens einem Punkt einhängbar ausgestaltet ist

6. Waage nach einem der Ansprüche 1 bis 5, wobei das Trägerelement (20) ein T-förmiges Koppelelement (45) und einen an diesem in vertikaler Richtung spielfrei verschieblichen Grundkörper (26) aufweist.

7. Waage nach Anspruch 6, wobei das T-förmige Koppelelement (45) aus einer Vertikal-Achse (25) und einem an dem oberen Ende der Vertikal-Achse (25) befestigten und bezüglich der Symmetrieebene der Wägezelle symmetrisch ausgestalteten Horizontal-Steg (24) besteht, wobei der Horizontal-Steg (24) über Einhängzapfen (23) verfügt, welche in Öffnungen (22, 22a, 22b, 122a, 122b) eines oberen Vorsprungs (21) des vertikal beweglichen Lastaufnehmers (15) eingreifen, und dass die Vertikal-Achse (25) sich an ihrem unteren Ende an einem unteren Vorsprung (28) des Lastaufnehmers (15) abstützt.

8. Waage nach Anspruch 7, wobei in den Öffnungen (22, 22a, 22b) des oberen Vorsprungs (21) des Lastaufnehmers (15) rollende Elemente, insbesondere Kugeln (32) vorhanden sind, mittels derer die Einhängzapfen (23) des Horizontal-Stegs (24) reibungsarm geführt sind.

9. Waage nach Anspruch 8, wobei die rollenden Elemente aus thermisch isolierendem Material bestehen, wodurch das Trägerelement (20) gegenüber dem Lastaufnehmer(15) thermisch entkoppelt ist.

10. Waage nach einem der Ansprüche 7 bis 9, wobei zur Abstützung der Vertikal-Achse (25) am unteren Ende des Lastaufnehmers (15) ein Lagerelement (35) vorhanden ist, welches in eine Bohrung (27) am unteren Vorsprung (28) des Lastaufnehmers (15) eingreift.

11. Waage nach Anspruch 10, wobei das Lagerelement (35) aus hochohmig leitfähigem Material, insbesondere einem hochohmig leitfähigen Kunststoff, gefertigt ist.

12. Waage nach einem der Ansprüche 1 bis 11, wobei der vertikal bewegliche Lastaufnehmer (15) der Wägezelle (2) über obere Biegegelenke (16) und untere Biegegelenke (17) mit einem feststehenden Teil der Wägezelle (2) verbunden ist, und dass die Abstützung des Trägerelements (20) am vertikal beweglichen Lastaufnehmer (15) der Wägezelle (2) bevorzugt in jeweils einer Horizontalebene mit den entsprechenden oberen und unteren Biegegelenken (16, 17) erfolgt.

13. Waage nach einem der Ansprüche 1 bis 12, wobei in das Trägerelement (20) ein Überlastschutz gegen zu hohe vertikal auf die Waagschale (14) und/oder den Ausleger (6) wirkende Kräfte integriert ist.

14. Waage nach Anspruch 13, wobei im Trägerelement (20) eine vorgespannte Spiralfeder (39), die sich auf einer an der Vertikal-Achse (25) befestigten Hülse (37) abstützt, als Bestandteil des integrierten Überlastschutzes gegen zu hohe in Richtung der Lastwirkung gerichtete Kräfte vorhanden ist.

15. Waage nach einem der Ansprüche 6 bis 14, wobei das T-förmige Koppelelement (45) im Grundkörper (26) über rollende Elemente, insbesondere Kugeln (48, 49), reibungsarm geführt ist.

16. Waage nach einem der Ansprüche 1 bis 15, wobei zur Begrenzung der Auslenkung des Trägerelements (20) infolge zu hoher in einer Richtung entgegengesetzt zur Richtung der Lastwirkung gerichtete Kräfte ein gehäusefester Anschlag (59) vorhanden ist.

17. Waage nach einem der Ansprüche 6 bis 16, wobei am Grundkörper (26) Blattfedern (47) befestigt sind, mittels derer der Ausleger (6) und/oder die Waagschale (14) justierbar geführt sind.

18. Waage nach einem der Ansprüche 7 bis 17, wobei der Ausleger (6) und/oder die Waagschale (14) bezüglich der Vertikal-Achse (25) lastunabhängig mit definierter Rückstellkraft in einer Richtung orthogonal zur Vertikal-Achse (25) verschwenkbar ist.

19. Waage nach einem der Ansprüche 1 bis 18, wobei die Waagschale (14) am Trägerelement (20) in drei ein sich in einer Ebene orthogonal zur Symmetrieebene der Wägezelle erstreckendes und bezüglich dieser symmetrisch angeordnetes gleichschenkliches Dreieck bildenden Punkten abgestützt ist.

20. Waage nach einem der Ansprüche 7 bis 19, wobei am Trägerelement (20) eine um die Vertikal-Achse (25) horizontal verschwenkbare Wippe (53) vorhanden ist, mittels derer eine am Trägerelement (20) eingehängte Waagschale (14) derart geführt ist, dass der Kraftfluss der Waagschale über drei Punkte definiert in den Träger erfolgt.

21. Waage nach einem der Ansprüche 1 bis 20, wobei zwischen dem Ausleger (6) und der Waagschale (14) der geschlossene Boden (9) des Wägeraums (3) angeordnet ist.

22. Waage nach einem der Ansprüche 1 bis 21, wobei die Wägezelle (2) eine nach dem Prinzip der elektromagnetischen Kraftkompensation arbeitende wegarme Wägezelle (2) ist.

## Claims

1. Balance with a weighing cell (2) including a vertically movable load receiver (15), with a weighing pan (14) to receive a weighing load, and with a support element (20) to couple the weighing pan (14) to the vertically movable load receiver (15) of the weighing cell (2), wherein a cantilever arm (6) with a seat (7) for at least one calibration weight (8) of a calibration device is solidly connected to the support element (20), wherein the balance has a coupling arrangement (22, 22a, 22b, 122a, 122b, 23, 35, 46) for the force transmission from the support element (20) into the load receiver (15), wherein said coupling arrangement guides the support element (20) with low-friction mobility on the load receiver (15) at three points forming an isosceles triangle in a plane that extends orthogonal to the symmetry plane of the weighing cell (2), said triangle being symmetric to said symmetry plane, and wherein the coupling arrangement solidly supports the support element (20) on the load receiver (15) in the direction in which the weighing load is acting.

2. Balance according to claim 1, wherein the weighing pan (14) is arranged on the support element (20) so that the weighing pan can be taken off the support element.

3. Balance according to claim 1 or 2, wherein the weighing pan (14) is configured so that it can be hooked onto suspension bolts (12) that are arranged laterally on the support element (20).

4. Balance according to claim 1, 2 or 3, wherein the support element (20) is configured as a completely detachable assembly unit which can be installed and uninstalled on the vertically movable load receiver (15) of the weighing cell (2) without any implements.

5. Balance according to one of the claims 1 to 4, wherein for supporting and constraining the support element (20) on the vertically movable load receiver (15) of the weighing cell (2), the support element (20) is configured so that it can be hooked onto the load receiver (15) in at least one point.

6. Balance according to one of the claims 1 to 5, wherein the support element (20) includes a T-shaped coupling element (45) and a base element (26) that is vertically movable on the coupling element without play.

7. Balance according to claim 6, wherein the T-shaped coupling element (45) consists of a vertical column (25) and a horizontal member (24) that is fastened to the upper end of the vertical column (25) and is symmetric relative to the symmetry plane of the weighing cell, wherein the horizontal member (24) has retaining pegs (23) designed for engagement in openings (22, 22a, 22b, 122a, 122b) of an upper projection (21) of the vertically movable load receiver (15), and wherein the vertical column (25) is seated at its bottom end on a lower projection (28) of the load receiver (15).

8. Balance according to claim 7, wherein rolling elements, in particular balls (32), are arranged in the openings (22, 22a, 22b) of the upper projection (21) of the load receiver (15) to provide low-friction guidance for the retaining pegs (23) of the horizontal member (24).

9. Balance according to claim 8, wherein the rolling elements consist of a thermally insulating material, whereby the support element (20) is thermally decoupled from the load receiver (15).

10. Balance according to one of the claims 7 to 9, wherein a bearing element (35) is arranged at the lower end of the load receiver (15) for the support of the vertical column (25), which bearing element is inserted in a bore hole (27) in the lower projection (28) of the load receiver (15).

11. Balance according to claim 10, wherein the bearing element (35) is made of an electrically conductive material with a high electrical resistance, in particular of an electrically conductive polymer with a high electrical resistance.

12. Balance according to one of the claims 1 to 11, wherein the vertically movable load receiver (15) of the weighing cell (2) is connected to a stationary part of the weighing cell (2) through upper flexure pivots (16) and lower flexure pivots (17), and wherein the seating of the support element (20) on the vertically movable load receiver (15) of the weighing cell (2) is arranged preferably at locations that lie in the same respective horizontal planes as the upper and lower flexure pivots (16, 17).

13. Balance according to one of the claims 1 to 12, wherein an overload safety device is integrated in the support element (20) for protection from excessive forces acting vertically on the weighing pan (14) and/or on the cantilever arm (6).

14. Balance according to claim 13, wherein a pre-tensioned coil spring (39) is arranged in the support element (20) as a part of the integrated overload safety device for protection from excessive forces acting in the same direction as the weighing load, said coil spring (39) exerting a biasing force against a sleeve (37) that is fastened to the vertical column (25).

15. Balance according to one of the claims 6 to 14, wherein the T-shaped coupling element (45) is guided with low-friction mobility in the base element (26) through rolling elements, in particular balls (48, 49).

16. Balance according to one of the claims 1 to 15, wherein an end stop (59) is provided at a fixed location relative to the housing in order to limit the displacement travel of the support element (20) that occurs as a consequence of excessive forces acting in the opposite direction of the weighing load.

17. Balance according to one of the claims 6 to 16, wherein leaf springs (47) are arranged on the base element (26) to provide an adjustable constraint for the cantilever arm (6) and/or the weighing pan (14).

18. Balance according to one of the claims 7 to 17, wherein the cantilever arm (6) and/or the weighing pan (14) has the mobility to swivel in a direction orthogonal to the vertical column (25), wherein said mobility is independent of the weighing load and opposed by a defined position-restoring force.

19. Balance according to one of the claims 1 to 18, wherein the weighing pan (14) is seated on the support element (20) at three points forming an isosceles triangle in a plane that is orthogonal to the symmetry plane of the weighing cell, said triangle being symmetric to said symmetry plane.

20. Balance according to one of the claims 7 to 19, wherein the support element (20) includes a rocker element (53) that is free to swivel horizontally about the vertical column (25), said rocker element serving to guide a balance pan (14) suspended on the support element (20) in such a manner that the forces from the weighing pan to the support element are transmitted through three points and are thus statically defined.

21. Balance according to one of the claims 1 to 20, wherein the floor (9) of the weighing compartment (3) extends without openings between the cantilever arm (6) and the weighing pan (14).

22. Balance according to one of the claims 1 to 21, wherein the weighing cell (2) is a weighing cell that operates according to the principle of electromagnetic force compensation with a minimum amount of displacement travel.

## Revendications

1. Balance comprenant une cellule de pesée (2) présentant un récepteur de charge (15) pouvant être dévié verticalement, un plateau de balance (14) pour la réception d'un objet à peser et un élément support (20) pour le rattachement du plateau de balance (14) au récepteur de charge (15) pouvant être dévié verticalement de la cellule de pesée (2), un cantilever (6) dotée d'un support (7) pour au moins un poids de calibrage (8) d'un dispositif de calibrage étant reliée de façon fixe à l'élément support (20), un dispositif de rattachement (22, 22a, 22b, 122a, 122b, 23, 35, 46) étant présent, au moyen duquel l'élément support (20) est guidé avec peu de frottement de façon mobile sur le récepteur de charge (15) pour l'application de force dans la cellule de pesée (2) en trois points formant un triangle isocèle s'étendant dans un plan perpendiculairement au plan de symétrie de la cellule de pesée (2) et disposé de façon symétrique par rapport à cette cellule, et est soutenu en direction de l'effet de charge sur le récepteur de charge (15).

2. Balance selon la revendication 1, le plateau de balance (14) étant placé de façon amovible sur l'élément support (20).

3. Balance selon la revendication 1 ou 2, le plateau de balance (14) étant conçu de façon à pouvoir s'accrocher sur des boulons de retenue (12) placés latéralement sur l'élément support (20).

4. Balance selon la revendication 1, 2 ou 3, l'élément support (20) étant conçu sous forme d'unité de montage entièrement dissociable, qui peut être installée de façon amovible sans moyen auxiliaire sur le récepteur de charge (15) mobile verticalement de la cellule de pesée (2).

5. Balance selon l'une quelconque des revendications 1 à 4, l'élément support (20) étant conçu de façon à pouvoir être accroché en au moins un point pour le soutien et le guidage sur le récepteur de charge (15) mobile verticalement de la cellule de pesée (2).

6. Balance selon l'une quelconque des revendications 1 à 5, l'élément support (20) présentant un élément de couplage en T (45) et un corps de base (26) coulissant sans jeu sur cet élément dans le sens vertical.

7. Balance selon la revendication 6, l'élément de couplage (45) en T étant constitué d'un axe vertical (25) et d'une nervure horizontale (24) fixée sur l'extrémité supérieure de l'axe vertical (25) et conçue de façon symétrique par rapport au plan de symétrie de la cellule de pesée, la nervure horizontale (24) disposant de tenons d'accrochage (23), qui s'engagent dans des ouvertures (22, 22a, 22b, 122a, 122b) d'une saillie (21) supérieure du récepteur de charge (15) mobile verticalement, et l'axe vertical (25) s'appuyant sur son extrémité inférieure sur une saillie (28) inférieure du récepteur de charge (15).

8. Balance selon la revendication 7, des éléments roulants, en particulier des billes (32), étant présents dans les ouvertures (22, 22a, 22b) de la saillie (21) supérieure du récepteur de charge (15), éléments au moyen desquels les tenons d'accrochage (23) de la nervure horizontale (24) sont guidés avec peu de frottement.

9. Balance selon la revendication 8, les éléments roulants étant à base de matériau thermo-isolant, l'élément support (20) étant dissocié thermiquement par rapport au récepteur de charge (15).

10. Balance selon l'une quelconque des revendications 7 à 9, un élément de palier (35) étant présent pour le soutien de l'axe vertical (25) sur l'extrémité inférieure du récepteur de charge (15), lequel élément s'engage dans un perçage (27) sur la saillie (28) inférieure du récepteur de charge (15).

11. Balance selon la revendication 10, l'élément de palier (35) étant fabriqué à base de matériau conducteur à grande résistance, en particulier une matière synthétique résistante conductrice à grande résistance.

12. Balance selon l'une quelconque des revendications 1 à 11, le récepteur de charge (15) mobile verticalement de la cellule de pesée (2) étant relié par des articulations de flexion (16) supérieures et des articulations de flexion (17) inférieures à une partie fixe de la cellule de pesée (2), et le soutien de l'élément support (20) sur le récepteur de charge (15) mobile verticalement de la cellule de pesée (2) s'effectuant de préférence dans respectivement un plan horizontal avec les articulations de flexion (16, 17) supérieures et inférieures correspondantes.

13. Balance selon l'une quelconque des revendications 1 à 12, une protection de surcharge contre des forces trop élevées agissant verticalement sur le plateau de balance (14) et/ou le cantilever (6) étant intégrée dans l'élément support (20).

14. Balance selon la revendication 13, un ressort en spirale (39) pré-tendu, qui s'appuie sur un manchon fixe (37) fixé sur l'axe vertical (25), étant présent dans l'élément support (20) comme composant de la protection de surcharge intégrée contre des forces trop élevées dirigées en direction de l'effet de charge.

15. Balance selon l'une quelconque des revendications 6 à 14, l'élément de couplage (45) en forme de T étant guidé avec peu de frottement dans le corps de base (26) au moyen d'éléments roulants, en particulier des billes (48, 49).

16. Balance selon l'une quelconque des revendications 1 à 15, une butée (59) solidaire du boîtier étant présente pour délimiter la déviation de l'élément support (20) due à des forces trop élevées dirigées dans une direction opposée à la direction de l'effet de charge.

17. Balance selon l'une quelconque des revendications 6 à 16, des ressorts à lame (47) étant fixés sur le corps de base (26), ressorts au moyen desquels le cantilever (6) et/ou le plateau de balance (14) sont guidés de façon réglable.

18. Balance selon l'une quelconque des revendications 7 à 17, le cantilever (6) et/ou le plateau de balance (14) pouvant être basculé(s) par rapport à l'axe vertical (25) de façon indépendante de la charge avec une force de rappel définie dans une direction perpendiculaire à l'axe vertical (25).

19. Balance selon l'une quelconque des revendications 1 à 18, le plateau (14) étant soutenu sur l'élément support (20) en trois points formant un triangle isocèle s'étendant dans un plan perpendiculairement au plan de symétrie de la cellule de pesée et disposé de façon symétrique par rapport à ce plan.

20. Balance selon l'une quelconque des revendications 7 à 19, une bascule (53) pouvant être basculée horizontalement autour de l'axe vertical (25) étant présente sur l'élément support (20), bascule au moyen de laquelle un plateau de balance (14) accroché sur l'élément support (20) est guidé de telle sorte que le flux de force du plateau de balance s'effectue au moyen de trois points de façon définie dans le support.

21. Balance selon l'une quelconque des revendications 1 à 20, le fond (9) fermé de l'espace de pesée (3) étant disposé entre le cantilever (6) et le plateau de balance (14).

22. Balance selon l'une quelconque des revendications 1 à 21, la cellule de pesée (2) étant une cellule de pesée (2) à faible course et travaillant selon le principe de la compensation de force électromagnétique.
